# EUROPEAN PATENT APPLICATION

(11) **EP 4 693 675 A1**
(43) Date of publication of application: **11.02.2026**
(21) Application number: 24777417.7
(22) Date of filing: 09.01.2024
(51) Int. Cl.: H01M 50/342, H01M 50/528, H01M 50/152

(54) **END CAP ASSEMBLY, ENERGY STORAGE DEVICE AND ELECTRIC DEVICE**

(30) Priority: 30.03.2023 CN 202310331728
(71) Applicant: Xiamen Hithium Energy Storage Technology Co., Ltd., Xiamen, Fujian 361100 (CN)
(72) Inventor: XIONG, Yongfeng, Xiamen, Fujian 361100 (CN)
(74) Representative: Mewburn Ellis LLP
(86) International application number: PCT/CN2024/071356
(87) International publication number: WO 2024/198621

(57) **Abstract**

An end cover assembly, an energy-storage apparatus, and an electricity-consumption device are provided in the disclosure, which can avoid safety hazards caused by excessive internal gas pressure in the energy-storage apparatus, thereby helping to improve the service life of the energy-storage apparatus. The end cover assembly includes a current collector plate, a cover body, and an explosion-proof valve. The cover body defines a mounting hole and an explosion-proof hole, the mounting hole and the explosion-proof hole both extend through the cover body in a thickness direction of the cover body, and the mounting hole and the explosion-proof hole are spaced apart from each other. The explosion-proof valve is mounted on the cover body and covers the explosion-proof hole. The current collector plate includes a main body portion and a boss portion. The main body portion is located at one side of the cover body in the thickness direction of the cover body, and the main body portion defines a welding groove. At least a portion of the welding groove is disposed opposite to the explosion-proof valve in a thickness direction of the end cover assembly. The boss portion is disposed on the surface of the main body portion facing towards the cover body and penetrates through the mounting hole, and the boss portion is provided with an identification mark. When viewed from a thickness direction of the current collector plate, a projection of a straight line passing through a center of the identification mark and parallel to a length direction of the welding groove intersects with the welding groove.

## Description

This application claims priority to Chinese Patent Application No. 202310331728.1, filed March 30, 2023, and entitled "END COVER ASSEMBLY, ENERGY-STORAGE APPARATUS, AND ELECTRICITY-CONSUMPTION DEVICE", the entire disclosure of which is incorporated herein by reference.

### TECHNICAL FIELD

This disclosure relates to the field of energy-storage technology, and in particular, to an end cover assembly, an energy-storage apparatus, and an electricity-consumption device.

### BACKGROUND

Energy-storage apparatus such as secondary batteries are widely used as the main power source for electricity-consumption devices due to their recyclable characteristics. As the demand for energy-storage apparatus gradually increases, people have higher and higher requirements for the performance of the energy-storage apparatus in various aspects. During the use or transportation of the energy-storage apparatus, tiny bubbles are easily generated inside the energy-storage apparatus, causing excessive internal pressure and posing safety hazards such as explosion to the energy-storage apparatus, thereby affecting the service life of the energy-storage apparatus.

### SUMMARY

An end cover assembly, an energy-storage apparatus, and an electricity-consumption device are provided in the disclosure, which can avoid safety hazards caused by excessive internal gas pressure in the energy-storage apparatus, thereby helping to improve the service life of the energy-storage apparatus.

In a first aspect, an end cover assembly applied to an energy-storage apparatus is provided in the disclosure. The end cover assembly includes a current collector plate, a cover body, and an explosion-proof valve. The cover body defines a mounting hole and an explosion-proof hole, the mounting hole and the explosion-proof hole both extend through the cover body in a thickness direction of the cover body, and the mounting hole and the explosion-proof hole are spaced apart from each other. The explosion-proof valve is mounted on the cover body and covers the explosion-proof hole. The current collector plate includes a main body portion and a boss portion. The main body portion is located at one side of the cover body in the thickness direction of the cover body, and the main body portion defines a welding groove. An opening of the welding groove is located in a surface of the main body portion facing towards the cover body, and at least a portion of the welding groove is disposed opposite to the explosion-proof valve in a thickness direction of the end cover assembly. The boss portion is disposed on the surface of the main body portion facing towards the cover body and penetrates through the mounting hole, and the boss portion is provided with an identification mark. When viewed from a thickness direction of the current collector plate, a projection of a straight line passing through a center of the identification mark and parallel to a length direction of the welding groove intersects with the welding groove.

In a second aspect, an energy-storage apparatus is further provided in the disclosure. The energy-storage apparatus includes a casing, an electrode assembly, and the end cover assembly mentioned above. The casing defines an opening and an accommodating cavity. The electrode assembly is accommodated in the accommodating cavity, the end cover assembly seals the opening, and the current collector plate is electrically connected to the electrode assembly.

In a third aspect, an electricity-consumption device is further provided in the disclosure. The electricity-consumption device includes the energy-storage apparatus mentioned above. The energy-storage apparatus is configured to supply power to the electricity-consumption device.

The end cover assembly of the disclosure is provided with the explosion-proof valve. When the internal gas pressure of the energy-storage apparatus is too high, the explosion-proof valve will rupture under the gas pressure, allowing the gas inside the energy-storage apparatus to be promptly discharged to the exterior of the energy-storage apparatus. This prevents the energy-storage apparatus from exploding due to excessive internal gas pressure, thereby improving the safety and the reliability of the energy-storage apparatus and extending the service life of the energy-storage apparatus. Moreover, since the explosion-proof valve is disposed opposite to at least a portion of the welding groove of the current collector plate, false triggering of the explosion-proof valve caused by direct impact of the electrolyte on the explosion-proof valve may be prevented when the energy-storage apparatus falls, thereby ensuring the reliability of the energy-storage apparatus.

### BRIEF DESCRIPTION OF THE DRAWINGS

In order to describe technical solutions of embodiments of the disclosure more clearly, the following will give an introduction to the accompanying drawings used for describing the embodiments of the disclosure.
FIG. 1 is a diagram of an application scenario of an energy-storage system provided in an embodiment of the disclosure.
FIG. 2 is a schematic structural view of an energy-storage apparatus in the energy-storage system illustrated in FIG. 1.
FIG. 3 is a schematic structural view of an end cover assembly of the energy-storage apparatus illustrated in FIG. 2 according to a first embodiment.
FIG. 4 is an exploded schematic structural view of the end cover assembly illustrated in FIG. 3.
FIG. 5 is a schematic cross-sectional structural view of the end cover assembly illustrated in FIG. 3, taken along line A-A.
FIG. 6 is a schematic structural view of a current collector plate in the end cover assembly illustrated in FIG. 3.
FIG. 7 is a schematic cross-sectional structural view of the current collector plate illustrated in FIG. 6.
FIG. 8 is a schematic structural view of a cover body in the end cover assembly illustrated in FIG. 3.
FIG. 9 is a schematic cross-sectional structural view of the cover body illustrated in FIG.8.
FIG. 10 is a schematic structural view of an end cover assembly illustrated in FIG. 3 according to a second embodiment.
FIG. 11 is a schematic cross-sectional structural view of the end cover assembly illustrated in FIG. 10.
FIG. 12 is a schematic structural view of a current collector plate in the end cover assembly illustrated in FIG. 10.
FIG. 13 is a schematic structural view of an end cover assembly illustrated in FIG. 3 according to a third embodiment.
FIG. 14 is a schematic cross-sectional structural view of the end cover assembly illustrated in FIG. 13.
FIG. 15 is a schematic structural view of a current collector plate in the end cover assembly illustrated in FIG. 13.
FIG. 16 is a schematic structural view of a cover body in the end cover assembly illustrated in FIG. 13.
FIG. 17 is a schematic structural view of an end cover assembly illustrated in FIG. 3 according to a fourth embodiment.
FIG. 18 is a schematic cross-sectional structural view of the end cover assembly illustrated in FIG. 17.
FIG. 19 is a schematic structural view of a current collector plate in the end cover assembly illustrated in FIG. 17.
FIG. 20 is a schematic structural view of an end cover assembly illustrated in FIG. 3 according to a fifth embodiment.
FIG. 21 is a schematic cross-sectional structural view of the end cover assembly illustrated in FIG. 20.
FIG. 22 is a schematic structural view of a current collector plate in the end cover assembly illustrated in FIG. 20.

Corresponding names for reference signs in the accompanying drawings are as follows:
energy-storage system 1000, electrical energy conversion apparatus 300, user load 200, energy-storage apparatus 100, casing 110, end cover assembly 120, current collector plate 10, cover body 20, explosion-proof valve 30, central axis 10a, main body portion 101, boss portion 102, first sub-boss 108, second sub-boss 109, reference plane 10b, welding groove 103, groove bottom-wall 103a, through hole 104, liquid injection hole 105, stepped portion 106, liquid injection portion 107, first central plane 103b, mounting groove 201, groove bottom-surface 201a, mounting hole 202, assembling groove 205, groove bottom-surface 205a, explosion-proof hole 203, hole wall 202a, third central plane 203a, second central plane 301, identification hole 102a, identification protrusion 102b, avoidance groove 204, first portion 107a, second portion 107b.

### DETAILED DESCRIPTION

The following will clearly and completely illustrate technical solutions of embodiments of the disclosure with reference to the accompanying drawings of embodiments of the disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is well-known, in order to achieve the ambitious goal for carbon neutrality, the main way of generating green electrical energy is currently to develop green energy such as photovoltaics and wind power to replace fossil energy.

At present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further cause loss of the electric power. Therefore, "abandoned wind and abandoned light" may occur due to insufficient power demand or insufficient power-grid admitting ability, and energy storage is required to solve these problems. That is, electrical energy is stored by converting it into other forms of energy by physical or chemical means, and energy is released by converting it into electrical energy when needed. In brief, energy storage is similar to a large "power bank", which stores electrical energy when photovoltaics and wind energy are sufficient and releases stored electric power when needed.

Taking electrochemical energy storage as an example, an energy-storage apparatus 100 is provided in the disclosure. The energy-storage apparatus 100 includes a set of chemical batteries. Chemical elements in the chemical batteries are used as an energy storage medium to implement a charging/discharging process through chemical reaction or change of the energy storage medium. In brief, electrical energy generated by solar energy and wind energy is stored in the chemical batteries. When the usage of external electrical energy reaches a peak, the power stored in the chemical batteries is released for use, or is transferred to a place where the power is scarce for reuse.

At present, energy storage may be applied in various application scenarios, including power-generation-side energy storage, grid-side energy storage, renewable energy grid-connected energy storage, user-side energy storage, etc. Corresponding types of energy-storage apparatus include the following.
(1) A large-sized energy-storage container applied in a grid-side energy-storage scenario. The energy-storage container may serve as a high-quality active and reactive regulation power source in the grid, which can realize matching of electrical energy loads in time and space, enhance the capacity for integration of renewable energy, and is of great significance in the backup of the grid system, relieving the pressure of power supply at a peak load, and peak shaving and frequency modulation.
(2) A small and medium-sized energy-storage cabinet applied in a user-side industrial and commercial energy-storage scenario (banks, shopping malls, and the like), as well as a small-sized household energy-storage box applied in a user-side household energy-storage scenario, which mainly operate in a "peak shaving and valley filling" mode. Based on the demand for electricity, there may be a significant price difference in electricity prices at peak and valley periods. In order to reduce cost, an energy-storage cabinet/box may be charged during an electricity-price valley period, and the electricity in the energy-storage apparatus may be released for use during the electricity-price peak period to save electricity cost. Additionally, in remote areas and regions prone to natural disasters such as earthquakes and hurricanes, household energy-storage apparatus can serve as a backup power supply for users and the power grid, eliminating the inconvenience caused by frequent power outages due to disasters or other reasons.

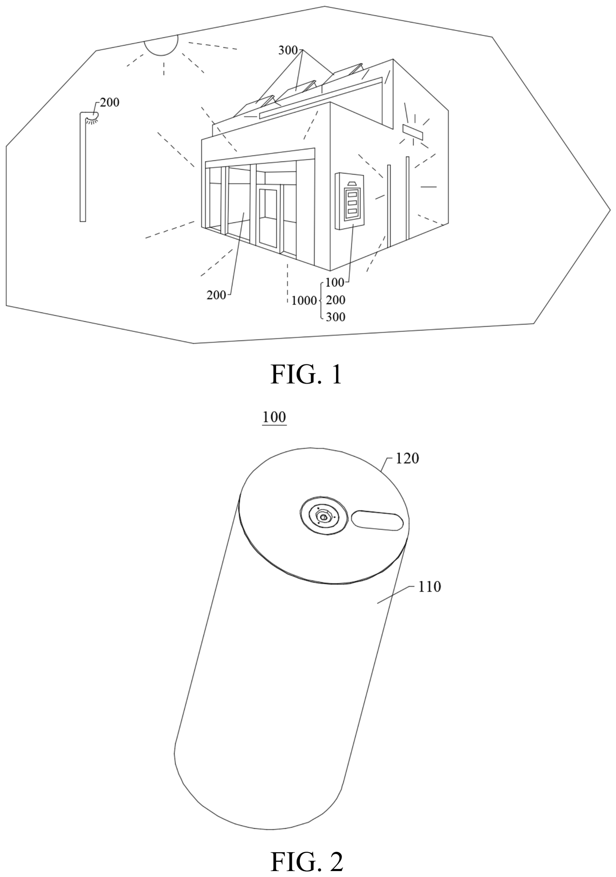

Reference is made to FIG. 1, which is a diagram of an application scenario of an energy-storage system 1000 provided in an embodiment of the disclosure.

As illustrated in FIG. 1, a household energy-storage scenario in user-side energy storage is taken as an example for illustration. However, it may be understood that, the energy-storage system 1000 provided in the disclosure is not limited to the household energy-storage scenario. In this embodiment, the energy-storage system 1000 may be a household energy-storage system. The energy-storage system 1000 includes an electrical energy conversion apparatus 300, a user load 200, and an energy-storage apparatus 100. The energy-storage apparatus 100 may be a small-size energy-storage box, and can be installed on an outdoor wall through wall mounting. Exemplarily, the electrical energy conversion apparatus 300 may be a photovoltaic panel. The electrical energy conversion apparatus 300 may convert solar energy into electrical energy during the electricity-price valley period. The energy-storage apparatus 100 is configured to store the electrical energy and supply power to the user load 200 such as streetlights and household appliances during the electricity-price peak period, or supply power during grid power outages or blackouts. In this embodiment, the energy-storage apparatus 100 may be, but is not limited to, a cell, a cell module, a cell pack, a cell system, etc. Exemplarily, in the case where the energy-storage apparatus 100 is a cell, it may be a cylindrical cell or a prismatic cell.

Reference is made to FIG. 2, which is a schematic structural view of the energy-storage apparatus 100 in the energy-storage system 1000 illustrated in FIG. 1.

In this embodiment, the energy-storage apparatus 100 is a cylindrical cell. The energy-storage apparatus 100 includes a casing 110, an end cover assembly 120, and an electrode assembly. Exemplarily, the casing 110 may be made of aluminum. The casing 110 is of a cylindrical shape. The casing 110 has an opening (not illustrated in the drawings) and an accommodating cavity (not illustrated in the drawings). The electrode assembly is accommodated in the accommodating cavity. Exemplarily, the electrode assembly is a wound electrode assembly. The electrode assembly includes a core (not illustrated in the drawings) and a tab (not illustrated in the drawings). The tab is fixedly connected to the core. The accommodating cavity is also configured to accommodate an electrolyte, and the electrode assembly is immersed in the electrolyte. The end cover assembly 120 is mounted on one side of the casing 110 in a height direction of the casing 110 and covers the opening. In some other embodiments, the energy-storage apparatus 100 may also be a prismatic cell or other components having an electric power storage function.

It may be noted that, terms relating to orientations such as "outside" and "inside" in the disclosure are described with respect to the orientation of the energy-storage apparatus 100 illustrated in FIG. 1. An orientation facing towards the outside of the casing 110 is referred to as "outside", an orientation facing towards the inside of the casing 110 is referred to as "inside", and similar descriptions hereinafter may be understood in the same manner.

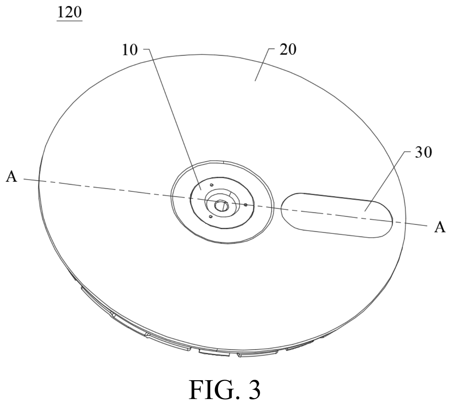

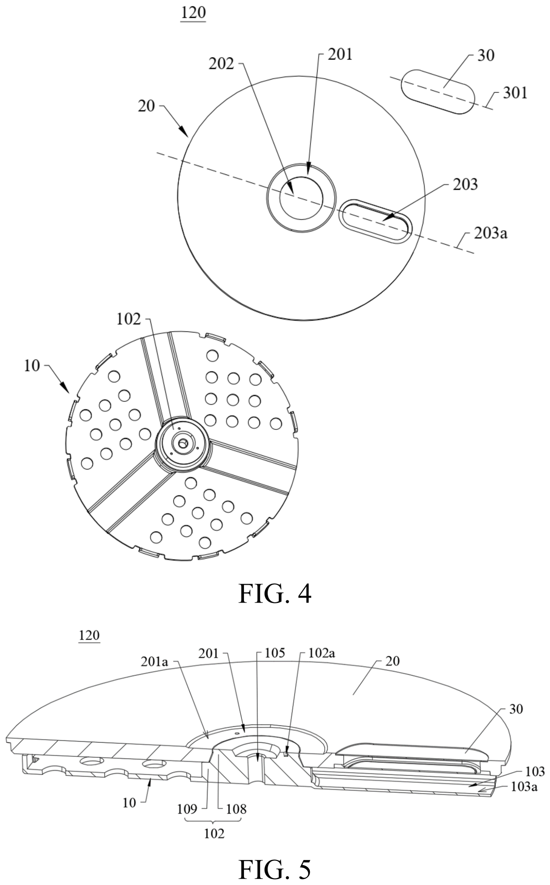

Reference is made to FIG. 3, FIG. 4, and FIG. 5. FIG. 3 is a schematic structural view of the end cover assembly 120 of the energy-storage apparatus 100 illustrated in FIG. 2 according to a first embodiment. FIG. 4 is an exploded schematic structural view of the end cover assembly 120 illustrated in FIG. 3. FIG. 5 is a schematic cross-sectional structural view of the end cover assembly 120 illustrated in FIG. 3, taken along line A-A. The phrase of taken along line A-A refers to that the cross-section is taken along the plane in which the line A-A is located.

The end cover assembly 120 includes a current collector plate 10, a cover body 20, and an explosion-proof valve 30. The current collector plate 10 is mounted on the inner side of the casing 110 and is electrically connected to the tab of the core. Exemplarily, the current collector plate 10 may be electrically connected to the tab of the electrode assembly by welding. The cover body 20 is mounted on one side of the current collector plate 10 in a thickness direction of the current collector plate 10. The explosion-proof valve 30 is mounted on the cover body 20 and is spaced apart from the current collector plate 10.

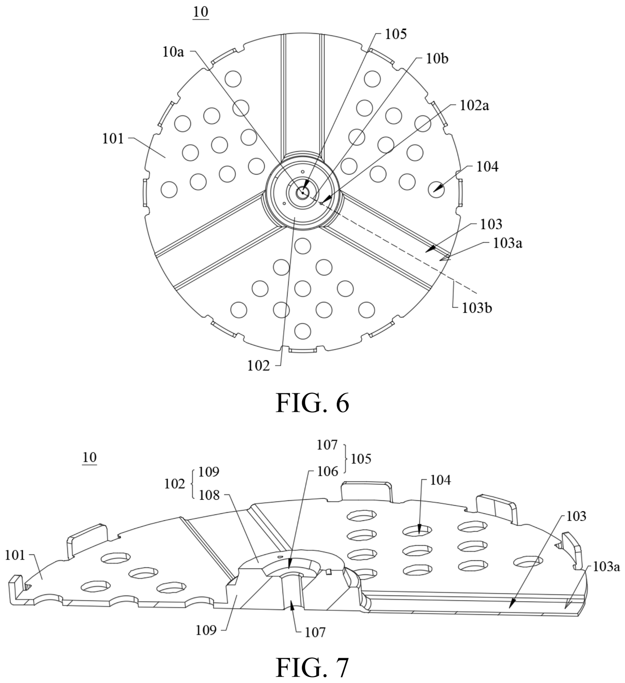

Reference is made to FIG. 5, FIG. 6, and FIG. 7 in combination. FIG. 6 is a schematic structural view of the current collector plate 10 in the end cover assembly 120 illustrated in FIG. 3. FIG. 7 is a schematic cross-sectional structural view of the current collector plate 10 illustrated in FIG. 6.

In this embodiment, the current collector plate 10 is of a disc shape. The current collector plate 10 has a central axis 10a. Exemplarily, the current collector plate 10 is rotationally symmetric about the central axis 10a. The current collector plate 10 includes a main body portion 101 and a boss portion 102. The main body portion 101 is located on one side of the cover body 20 in a thickness direction of the cover body 20. The boss portion 102 is disposed on a central region of a surface of the main body portion 101 facing towards the cover body 20.

The main body portion 101 defines a welding groove 103 and a through hole 104. An opening of the welding groove 103 is located in the surface of the main body portion 101 facing towards the cover body 20. The welding groove 103 is recessed from a surface of the main body portion 101 facing towards the boss portion 102 in a direction away from the boss portion 102, and the welding groove 103 extends through a side surface of the main body portion 101. Exemplarily, the welding groove 103 is in a shape of a long strip and extends in a radial direction of the main body portion 101. The welding groove 103 has a first central plane 103b, and the first central plane 103b is defined through the welding groove 103 and is parallel to a length direction of the welding groove 103. In this embodiment, the central axis 10a of the current collector plate 10 is located in the first central plane 103b. Additionally, the welding groove 103 has a groove bottom-wall 103a. The tab of the electrode assembly is welded to the groove bottom-wall 103a to achieve electrical connection between the electrode assembly and the current collector plate 10.

It may be understood that, the groove bottom-wall 103a of the welding groove 103 protrudes relative to a surface of the main body portion 101 facing away from the boss portion 102. As such, the welding area between the current collector plate 10 and the tab of the electrode assembly can be increased, avoiding false welding and ensuring the welding strength between the current collector plate 10 and the tab of the electrode assembly.

In this embodiment, there may be multiple welding grooves 103. The multiple welding grooves 103 are spaced apart from one another around the central axis 10a of the current collector plate 10. Exemplarily, there are three welding grooves 103. In some other embodiments, there may be one, two, or more than four welding grooves 103. The number of the welding grooves 103 is not specifically limited in embodiments of the disclosure.

The through hole 104 is spaced apart from the welding groove 103. The through hole 104 extends through the main body portion 101 in a thickness direction of the main body portion 101. Exemplarily, the through hole 104 is a circular hole. In some other embodiments, the through hole 104 may be a square hole or another irregularly shaped hole. In this embodiment, there are multiple through holes 104. The multiple through holes 104 are spaced apart from one another. The multiple through holes 104 form three through hole groups (not illustrated in the drawings). The three through hole groups are spaced apart from one another around the central axis 10a of the current collector plate 10. Two adjacent through hole groups are respectively located on two opposite sides of one welding groove 103.

The boss portion 102 includes a first sub-boss 108 and a second sub-boss 109. The second sub-boss 109 is fixedly connected to one side of the first sub-boss 108 facing away from the cover body 20. That is, the second sub-boss 109 is fixedly connected to one side of the first sub-boss 108 facing towards the main body portion 101. A peripheral surface of the second sub-boss 109 surrounds a peripheral surface of the first sub-boss 108 and exceeds the peripheral surface of the first sub-boss 108. In a direction from the main body portion 101 to the boss portion 102, a size of the first sub-boss 108 gradually decreases. A surface of the first sub-boss 108 facing away from the second sub-boss 109 is a surface of the boss portion 102 facing away from the main body portion 101.

The boss portion 102 is provided with an identification mark, and the identification mark is used to indicate an assembly position of the explosion-proof valve 30. Specifically, the identification mark is disposed on the surface of the boss portion 102 facing away from the main body portion 101. When viewed from the thickness direction of the current collector plate 10, a projection of a straight line passing through a center of the identification mark and parallel to the length direction of the welding groove 103 intersects with the welding groove 103. It may also be understood that, a plane defined by the center of the identification mark (not illustrated in the drawings) and the central axis 10a of the current collector plate 10 is a reference plane 10b. The reference plane 10b coincides with the first central plane 103b. That is, the reference plane 10b is defined through the welding groove 103. In other words, in a direction parallel to the end cover assembly 120, the identification mark is disposed opposite to the welding groove 103. In some other embodiments, when viewed from the thickness direction of the current collector plate 10, a projection of a straight line passing through a center of the current collector plate 10 and the center of the identification mark may intersect with the welding groove 103.

In this embodiment, there may be multiple identification marks, and the multiple identification marks are spaced apart from one another. When viewed from the thickness direction of the current collector plate 10, a projection of a straight line passing through a center of each identification mark and parallel to a length direction of one welding groove 103 intersects with one welding groove 103. It may also be understood that, a plane defined by the center of each identification mark and the central axis 10a of the current collector plate 10 is one reference plane 10b. Each reference plane 10b coincides with the first central plane 103b of one welding groove 103. That is, each reference plane 10b is defined through one welding groove 103. In other words, in the direction parallel to the end cover assembly 120, each identification mark is disposed opposite to one welding groove 103. Exemplarily, there are three identification marks. In some other embodiments, there may be one, two, or more than four identification marks. The number of the identification marks is not specifically limited in embodiments of the disclosure.

In this embodiment, the identification mark is an identification hole 102a. Exemplarily, the identification hole 102a is a blind hole. An opening of the identification hole 102a is located in a surface of the boss portion 102 facing away from the current collector plate 10. The identification hole 102a is recessed in a direction from the surface of the boss portion 102 facing away from the current collector plate 10 to the current collector plate 10. In some other embodiments, the identification mark may be an identification protrusion, which is not specifically limited in the disclosure.

The current collector plate 10 further defines a liquid injection hole 105. The liquid injection hole 105 extends through the current collector plate 10 in the thickness direction of the current collector plate 10. An opening of the liquid injection hole 105 is located in the surface of the boss portion 102 facing away from the main body portion 101. The liquid injection hole 105 is recessed in a detection from the surface of the boss portion 102 facing away from the main body portion 101 to the current collector plate 10. The liquid injection hole 105 extends through the surface of the current collector plate 10 facing away from the cover body 20, and communicates with the accommodating cavity of the casing 110. A central axis (not illustrated in the drawings) of the liquid injection hole 105 coincides with the central axis 10a of the current collector plate 10.

In this embodiment, the liquid injection hole 105 includes a stepped portion 106 and a liquid injection portion 107. The liquid injection portion 107 is located at a bottom side of the stepped portion 106 and communicates with the stepped portion 106. Exemplarily, both the stepped portion 106 and the liquid injection portion 107 are circular holes. Specifically, a diameter of the stepped portion 106 is larger than a diameter of the liquid injection portion 107. The stepped portion 106 has a hole wall surface (not illustrated in the drawings) facing towards the liquid injection portion 107. An electrolyte may be injected into the accommodating cavity via the liquid injection hole 105 to achieve filling of the electrolyte for the energy-storage apparatus 100. Since the central axis of the liquid injection hole 105 coincides with the central axis 10a of the current collector plate 10, the electrolyte can quickly infiltrate the cell from a central position of the cell, thereby enhancing the wetting effect of the cell in the electrolyte.

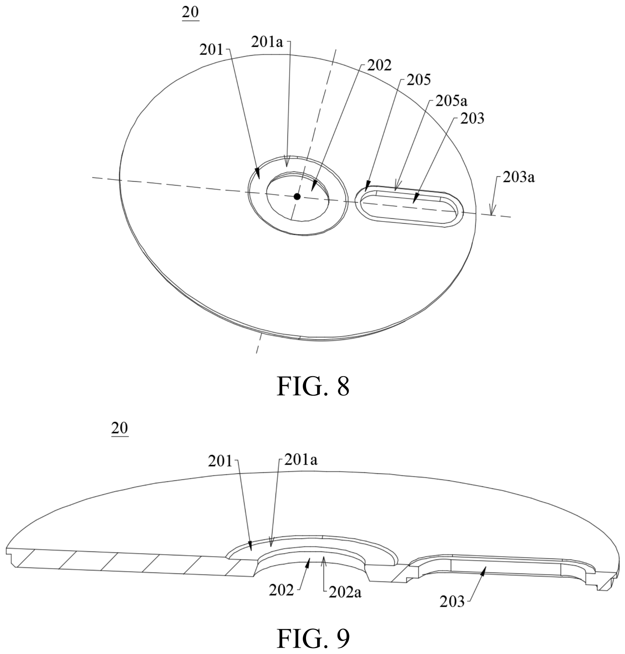

Reference is made to FIG. 5, FIG. 8, and FIG. 9 in combination. FIG. 8 is a schematic structural view of the cover body 20 in the end cover assembly 120 illustrated in FIG. 3. FIG. 9 is a schematic cross-sectional structural view of the cover body 20 illustrated in FIG.8.

In this embodiment, the cover body 20 is substantially of a disc shape. The cover body 20 has a central axis (not illustrated in the drawings), and a central axis of the cover body 20 coincides with the central axis 10a of the current collector plate 10. The cover body 20 defines a mounting groove 201, a mounting hole 202, an assembling groove 205, and an explosion-proof hole 203. Openings of both the mounting groove 201 and the assembling groove 205 are located in the surface of the cover body 20 facing away from the current collector plate 10. Both the mounting groove 201 and the assembling groove 205 are recessed in the direction from the surface of the cover body 20 facing away from the current collector plate 10 to the current collector plate 10. The mounting groove 201 is disposed at a central position of the cover body 20. Exemplarily, the mounting groove 201 is a circular groove. The mounting groove 201 has a groove bottom-surface 201a. In some other embodiments, the mounting groove 201 may be a square groove or another irregularly shaped groove. The assembling groove 205 is spaced apart from the mounting groove 201. Exemplarily, the assembling groove 205 is an elongated groove. The assembling groove 205 has a groove bottom-surface 205a. In some other embodiments, the assembling groove 205 may be a circular groove or another irregularly shaped groove.

The mounting hole 202 is disposed on the groove bottom-wall of the mounting groove 201. Specifically, an opening of the mounting hole 202 is located in the groove bottom-surface 201a of the mounting groove 201. The mounting hole 202 is recessed in a direction from the groove bottom-surface 201a of the mounting groove 201 to the current collector plate 10 and extends through the surface of the cover body 20 facing towards the current collector plate 10. Exemplarily, the mounting hole 202 is a circular hole. In some other embodiments, the mounting hole 202 may be a square hole or another irregularly shaped hole. The mounting hole 202 has a hole wall 202a.

Specifically, the boss portion 102 penetrates through the mounting hole 202 of the cover body 20, and the identification mark of the boss portion 102 is exposed outside the cover body 20. The hole wall 202a of the mounting hole 202 is in fit with a side surface of the first sub-boss 108 of the boss portion 102. The surface of the cover body 20 facing towards the current collector plate 10 abuts against a surface of the second sub-boss 109 of the boss portion 102 facing towards the first sub-boss 108. Exemplarily, the groove bottom-surface 201a of the mounting groove 201 is flush with the surface of the boss portion 102 facing away from the main body portion 101.

The explosion-proof hole 203 is defined on the groove bottom wall of the assembling groove 205. Specifically, an opening of the explosion-proof hole 203 is located in the groove bottom-surface 205a of the assembling groove 205. The explosion-proof hole 203 is recessed from the groove bottom-surface 205a of the assembling groove 205 in a direction of the surface of the cover body 20 facing towards the current collector plate 10, and the explosion-proof hole 203 extends through the surface of the cover body 20 facing towards the current collector plate 10. Exemplarily, the explosion-proof hole 203 is in a shape of a long strip and extends in a radial direction of the cover body 20. The explosion-proof hole 203 has a third central plane 203a. The third central plane 203a is parallel to a length direction of the explosion-proof hole 203, and the central axis of the cover body 20 is located in the third central plane 203a.

Specifically, at least a portion of the welding groove 103 is disposed opposite to the explosion-proof valve 30 in the thickness direction of the end cover assembly 120, and the explosion-proof valve 30 is staggered with the through hole 104 of the current collector plate 10. An extending direction of the explosion-proof hole 203 is parallel to an extending direction of the welding groove 103, and the third central plane 203a coincides with the first central plane 103b. In this case, the explosion-proof hole 203 can communicate with the interior of the energy-storage apparatus 100 via the through hole 104 of the current collector plate 10.

Reference is again made to FIG. 3 and FIG. 4. In this embodiment, the explosion-proof valve 30 is in a shape of a long strip, and an extending direction of the explosion-proof valve 30 is parallel to the extending direction of the explosion-proof hole 203. The explosion-proof valve 30 has a second central plane 301, and the second central plane 301 is defined through the explosion-proof valve 30 and is parallel to a length direction of the explosion-proof valve 30. Specifically, the explosion-proof valve 30 is mounted on the assembling groove 205 and covers the explosion-proof hole 203. The third central plane 203a of the explosion-proof hole 203 coincides with the second central plane 301. The central axis of the cover body 20 is located on the second central plane 301.

It may be understood that, since the explosion-proof hole 203 communicates the interior and the exterior of the energy-storage apparatus 100, when the internal gas pressure of the energy-storage apparatus 100 is too high, the gas inside the energy-storage apparatus 100 sequentially passes through the multiple through holes 104 of the current collector plate 10 and the explosion-proof hole 203 of the cover body 20 and impacts the explosion-proof valve 30. The explosion-proof valve 30 will rupture under the gas pressure, allowing the gas inside the energy-storage apparatus 100 to be promptly discharged to the exterior of the energy-storage apparatus 100. This prevents the energy-storage apparatus 100 from exploding due to excessive internal gas pressure, thereby improving the reliability of the energy-storage apparatus 100 and extending the service life of the energy-storage apparatus 100.

In this embodiment, during the assembly process of the end cover assembly 120, the cover body 20 can be rotated relative to the current collector plate 10. By rotating the cover body 20 relative to the current collector plate 10, the reference plane 10b in which the center of the identification mark is located can be defined through the explosion-proof valve 30. When the reference plane 10b coincides with the first central plane 103b, the second central plane 301 coincides with both the reference plane 10b and the first central plane 103b; or, when the reference plane 10b coincides with the first central plane 103b, the second central plane 301 intersects with both the reference plane 10b and the first central plane 103b, and an intersection line between the second central plane 301, the reference plane 10b, and the first central plane 103b coincides with the central axis 10a of the current collector plate 10. That is, in the direction parallel to the end cover assembly 120, the identification mark is disposed opposite to the explosion-proof valve 30. In this case, in the thickness direction of the end cover assembly 120, the explosion-proof valve 30 is disposed opposite to at least a portion of the welding groove 103 and is staggered with the through hole 104 of the current collector plate 10. A ratio of an area of a portion of the welding groove 103 opposite to the explosion-proof valve 30 to an area of the welding groove 103 is equal to or greater than 1/3. For example, the ratio of the area of the portion of the welding groove 103 opposite to the explosion-proof valve 30 to the area of the welding groove 103 may be 2/3 or 4/5. It may be noted that, the portion of the welding groove 103 opposite to the explosion-proof valve 30 refers to a portion of the welding groove 103 covered by a projection of the explosion-proof valve 30 on the current collector plate 10.

Exemplarily, in the case where there are multiple identification marks, the reference plane 10b in which the center of one identification mark is located coincides with both the first central plane 103b of one welding groove 103 and the second central plane 301 of the explosion-proof valve 30, or, the reference plane 10b in which the center of one identification mark is located coincides with the first central plane 103b of one welding groove 103 and intersects with the second central plane 301 of the explosion-proof valve 30. That is, the reference plane 10b in which the center of one identification mark is located is defined through one welding groove 103 and the explosion-proof valve 30. In this case, the explosion-proof valve 30 is disposed opposite to at least a portion of one welding groove 103.

In this embodiment, the explosion-proof valve 30 is disposed opposite to at least a portion of the welding groove 103. On one hand, when the energy-storage apparatus 100 falls, false triggering of the explosion-proof valve 30 caused by direct impact of the electrolyte on the explosion-proof valve 30 may be prevented, which helps to extend the service life of the energy-storage apparatus 100. On the other hand, the gas inside the energy-storage apparatus 100 is allowed to pass through the current collector plate 10 and diffuse to the explosion-proof valve 30, ensuring that the explosion-proof valve 30 can be opened normally when the internal gas pressure of the energy-storage apparatus 100 is too high. It may be noted that, during the assembly process of the end cover assembly 120, the cover body 20 can be rotated relative to the current collector plate 10 to make the explosion-proof valve 30 opposite to at least a portion of the welding groove 103.

In some other embodiments, the reference plane 10b in which the center of the identification mark is located may also intersect with the first central plane 103b of the welding groove 103, and an intersection line between the first central plane 103b and the reference plane 10b coincides with the central axis 10a of the current collector plate 10. That is, in the direction parallel to the end cover assembly 120, the identification mark is disposed opposite to a portion of the welding groove 103. When the reference plane 10b in which the center of the identification mark is located intersects with the first central plane 103b, the second central plane 301 intersects with both the reference plane 10b and the first central plane 103b, and an intersection line between the second central plane 301 and the reference plane 10b and an intersection line between the second central plane 301 and the first central plane 103b coincide with the central axis 10a of the current collector plate 10; or, when the reference plane 10b in which the center of the identification mark is located intersects with the first central plane 103b, the second central plane 301 coincides with the reference plane 10b and intersects with the first central plane 103b, and an intersection line between the second central plane 301 and the first central plane 103b coincides with the central axis 10a of the current collector plate 10; or, when the reference plane 10b in which the center of the identification mark is located intersects with the first central plane 103b, the second central plane 301 intersects with the reference plane 10b and coincides with the first central plane 103b, and an intersection line between the second central plane 301 and the reference plane 10b coincides with the central axis 10a of the current collector plate 10. That is, in the thickness direction of the end cover assembly 120, the explosion-proof valve 30 is disposed opposite to at least a portion of the welding groove 103. With this arrangement, on one hand, when the energy-storage apparatus 100 falls, false triggering of the explosion-proof valve 30 caused by direct impact of the electrolyte on the explosion-proof valve 30 may be prevented, which helps to extend the service life of the energy-storage apparatus 100. On the other hand, the gas inside the energy-storage apparatus 100 is allowed to pass through the current collector plate 10 and diffuse to the explosion-proof valve 30, ensuring that the explosion-proof valve 30 can be opened normally when the internal gas pressure of the energy-storage apparatus 100 is too high.

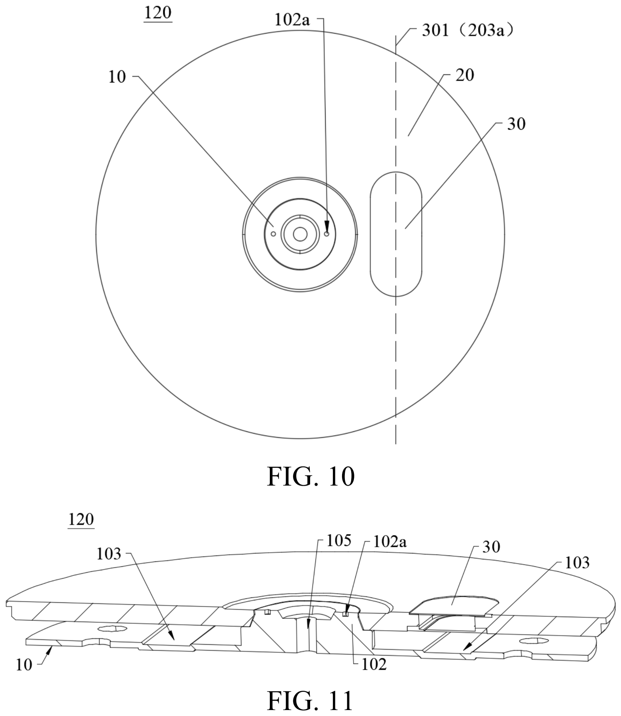

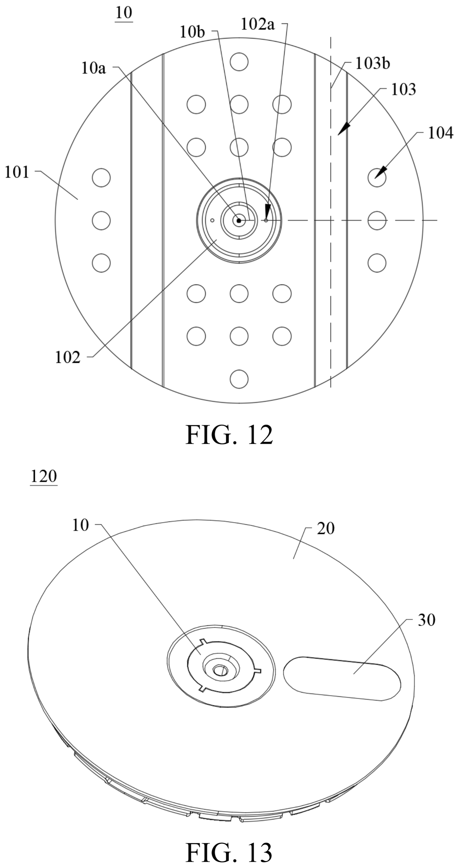

Reference is made to FIG. 10, FIG. 11, and FIG. 12 in combination. FIG. 10 is a schematic structural view of the end cover assembly 120 illustrated in FIG. 3 according to a second embodiment. FIG. 11 is a schematic cross-sectional structural view of the end cover assembly 120 illustrated in FIG. 10. FIG. 12 is a schematic structural view of the current collector plate 10 in the end cover assembly 120 illustrated in FIG. 10.

The end cover assembly 120 illustrated in this embodiment differs from the end cover assembly 120 in the first embodiment described above in that the first central plane 103b of the welding groove 103 is spaced apart from the central axis 10a of the current collector plate 10 and intersects with the reference plane 10b. In other words, the welding groove 103 extends in a chordal direction of the current collector plate 10. In this embodiment, there are two welding grooves 103. The two welding grooves 103 are parallel to each other and located on two opposite sides of the boss portion 102, respectively. With this arrangement, a laser welding equipment can weld the tab of the electrode assembly to the current collector plate 10 in the same direction, which helps to improve the welding efficiency of the tab and the current collector plate 10.

In this embodiment, the third central plane 203a of the explosion-proof hole 203 of the cover body 20 is spaced apart from the central axis of the cover body 20. That is, the explosion-proof hole 203 extends in a chordal direction of the cover body 20. The explosion-proof valve 30 is mounted on the assembling groove 205 of the cover body 20 and covers the explosion-proof hole 203. The second central plane 301 of the explosion-proof valve 30 coincides with the third central plane 203a of the explosion-proof hole 203. In this case, the second central plane 301 of the explosion-proof valve 30 is spaced apart from the central axis of the cover body 20, the second central plane 301 coincides with the first central plane 103b, and the second central plane 301 intersects with the reference plane 10b. In some other embodiments, the second central plane 301 may also intersect with the first central plane 103b.

During the assembly process of the end cover assembly 120, the cover body 20 can be rotated relative to the current collector plate 10. By rotating the cover body 20, the reference plane 10b in which the center of the identification mark is located can be defined through the explosion-proof valve 30. That is, in the thickness direction of the end cover assembly 120, the explosion-proof valve 30 is disposed opposite to at least a portion of the welding groove 103. The ratio of the area of the portion of the welding groove 103 opposite to the explosion-proof valve 30 to the area of the welding groove 103 is equal to or greater than 1/3. For example, the ratio of the area of the portion of the welding groove 103 opposite to the explosion-proof valve 30 to the area of the welding groove 103 may be 2/3 or 4/5. With this arrangement, false triggering of the explosion-proof valve 30 caused by direct impact of the electrolyte on the explosion-proof valve 30 may be prevented, which helps to extend the service life of the energy-storage apparatus 100. In addition, with this arrangement, the space around a terminal post is rationally used, and the explosion-proof valve 30 is positioned at a suitable explosion location.

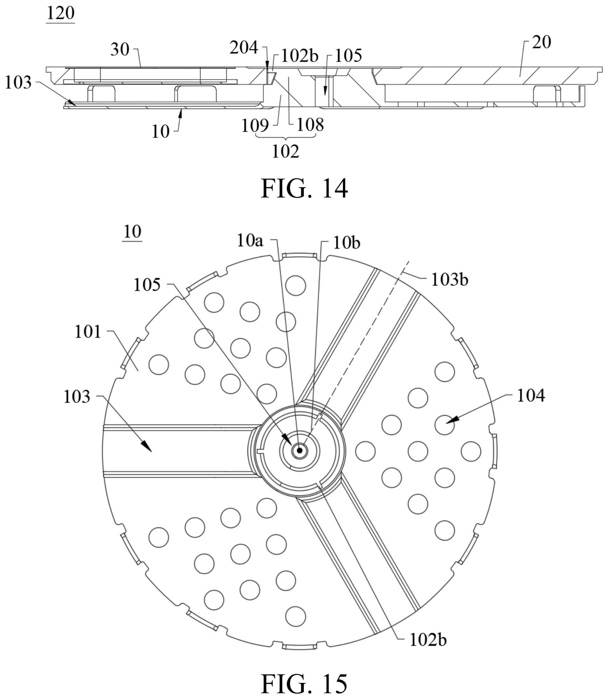

Reference is made to FIG. 13, FIG. 14, and FIG. 15 in combination. FIG. 13 is a schematic structural view of the end cover assembly 120 illustrated in FIG. 3 according to a third embodiment. FIG. 14 is a schematic cross-sectional structural view of the end cover assembly 120 illustrated in FIG. 13. FIG. 15 is a schematic structural view of the current collector plate 10 in the end cover assembly 120 illustrated in FIG. 13.

The end cover assembly 120 illustrated in this embodiment differs from the end cover assembly 120 in the first embodiment described above in that the identification mark is disposed on a side surface of the boss portion 102. Specifically, the identification mark is disposed on a side surface of the first sub-boss 108. In this embodiment, the identification mark is an identification protrusion 102b. The identification protrusion 102b is disposed on the side surface of the boss portion 102 and extends from a peripheral surface of the boss portion 102 in a direction away from the boss portion 102. Exemplarily, an extending direction of the identification protrusion 102b is parallel to the reference plane 10b.

In this embodiment, a plane defined by a center of a connection area between the identification protrusion 102b and the side surface of the boss portion 102 and the central axis 10a of the current collector plate 10 is the reference plane 10b. The reference plane 10b defined by the center of the connection area between the identification protrusion 102b and the side surface of the boss portion 102 coincides with the first central plane 103b. That is, the reference plane 10b in which the center of the connection area between the identification protrusion 102b and the side surface of the boss portion 102 is located is defined through the welding groove 103. In other words, in the direction parallel to the end cover assembly 120, the identification protrusion 102b is disposed opposite to the welding groove 103.

In this embodiment, there are three identification protrusions 102b. The three identification protrusions 102b are disposed around the side surface of the boss portion 102 and are spaced apart from one another. A plane defined by a center of a connection area between each identification protrusion 102b and the side surface of the boss portion 102 and the central axis 10a of the current collector plate 10 is one reference plane 10b. The reference plane 10b defined by the center of the connection area between each identification protrusion 102b and the side surface of the boss portion 102 coincides with the first central plane 103b. That is, the reference plane 10b in which the center of the connection area between each identification protrusion 102b and the side surface of the boss portion 102 is located is defined through one welding groove 103. In other words, in the direction parallel to the end cover assembly 120, each identification protrusion 102b is disposed opposite to one welding groove 103. In this case, the boss portion 102 may be substantially in the shape of an external spline.

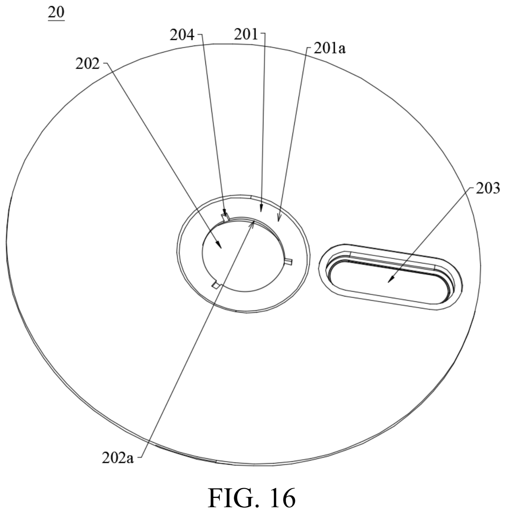

Reference is further made to FIG. 16, which is a schematic structural view of the cover body 20 in the end cover assembly 120 illustrated in FIG. 13.

The cover body 20 defines an avoidance groove 204, and the avoidance groove 204 avoids the identification protrusion 102b of the current collector plate 10. The avoidance groove 204 extends through the cover body 20 and the hole wall 202a of the mounting hole 202 in the thickness direction of the cover body 20. The avoidance groove 204 extends in the radial direction of the cover body 20.

In this embodiment, the reference plane 10b is defined through the avoidance groove 204 and the explosion-proof hole 203. Exemplarily, there are three avoidance grooves 204. The three avoidance grooves 204 are disposed around the periphery of the mounting hole 202 and are spaced apart from one another. Each avoidance groove 204 avoids one identification protrusion 102b. The reference plane 10b in which the center of the connection area between one identification protrusion 102b and the side surface of the boss portion 102 is located is defined through the explosion-proof hole 203 and one avoidance groove 204.

In some other embodiments, the identification mark may be an identification groove, and an opening of the identification groove is located in the side surface of the boss portion 102. The identification groove is recessed from the side surface of the boss portion 102 to the center of the protrusion. A plane defined by a center of a connection area between the identification groove and the side surface of the boss portion 102 (i.e., a center of the opening of the identification groove) and the central axis 10a of the current collector plate 10 is the reference plane 10b. The reference plane 10b defined by the center of the connection area between the identification groove and the side surface of the boss portion 102 coincides with or intersects with the first central plane 103b. That is, the reference plane 10b in which the center of the connection area between the identification groove and the side surface of the boss portion 102 is located is defined through the welding groove 103. In other words, in the direction parallel to the end cover assembly 120, the identification groove is disposed opposite to the welding groove 103. In this case, the boss portion 102 is substantially in the shape of an internal spline. A protrusion is disposed on the cover body 20, and the protrusion is disposed on the hole wall of the mounting hole 202 and is accommodated in the identification groove.

In this embodiment, during the assembly process of the end cover assembly 120, the cover body 20 may be rotated relative to the current collector plate 10 to make the identification protrusion 102b mounted in the avoidance groove 204, and the reference plane 10b in which the center of the connection area between the identification protrusion 102b and the side surface of the boss portion 102 is located can be defined through the explosion-proof valve 30. When the reference plane 10b defined by the center of the connection area between the identification protrusion 102b and the side surface of the boss portion 102 coincides with the first central plane 103b, the second central plane 301 of the explosion-proof valve 30 coincides with both the reference plane 10b and the first central plane 103b. That is, in the direction parallel to the end cover assembly 120, the identification protrusion 102b is disposed opposite to the explosion-proof valve 30. In this case, in the thickness direction of the end cover assembly 120, the explosion-proof valve 30 is disposed opposite to at least a portion of the welding groove 103. The ratio of the area of the portion of the welding groove 103 opposite to the explosion-proof valve 30 to the area of the welding groove 103 is equal to or greater than 1/3. For example, the ratio of the area of the portion of the welding groove 103 opposite to the explosion-proof valve 30 to the area of the welding groove 103 may be 2/3 or 4/5.

With this arrangement, the amount of electrolyte blocked by the welding groove 103 may be maximized, ensuring an optimal blocking effect of the welding groove 103. When the energy-storage apparatus 100 falls, false triggering of the explosion-proof valve 30 caused by direct impact of the electrolyte on the explosion-proof valve 30 may be prevented, which helps to extend the service life of the energy-storage apparatus 100. Meanwhile, the gas inside the energy-storage apparatus 100 is allowed to pass through the current collector plate 10 and diffuse to the explosion-proof valve 30, ensuring that the explosion-proof valve 30 can be opened normally when the internal gas pressure of the energy-storage apparatus 100 is too high.

In some other embodiments, the reference plane 10b defined by the center of the connection area between the identification protrusion 102b and the side surface of the boss portion 102 may also intersect with the first central plane 103b, and an intersection line between the first central plane 103b and the reference plane 10b coincides with the central axis 10a of the current collector plate 10. That is, in the direction parallel to the end cover assembly 120, the identification protrusion 102b is disposed opposite to a portion of the welding groove 103. In this case, the second central plane 301 of the explosion-proof valve 30 intersects with both the reference plane 10b and the first central plane 103b, and an intersection line between the second central plane 301, the reference plane 10b, and the first central plane 103b coincides with the central axis 10a of the current collector plate 10. With this arrangement, in the thickness direction of the end cover assembly 120, the explosion-proof valve 30 is disposed opposite to at least a portion of the welding groove 103, so that false triggering of the explosion-proof valve 30 caused by direct impact of the electrolyte on the explosion-proof valve 30 may be prevented, which helps to extend the service life of the energy-storage apparatus 100. Meanwhile, the gas inside the energy-storage apparatus 100 is allowed to pass through the current collector plate 10 and diffuse to the explosion-proof valve 30, ensuring that the explosion-proof valve 30 can be opened normally when the internal gas pressure of the energy-storage apparatus 100 is too high.

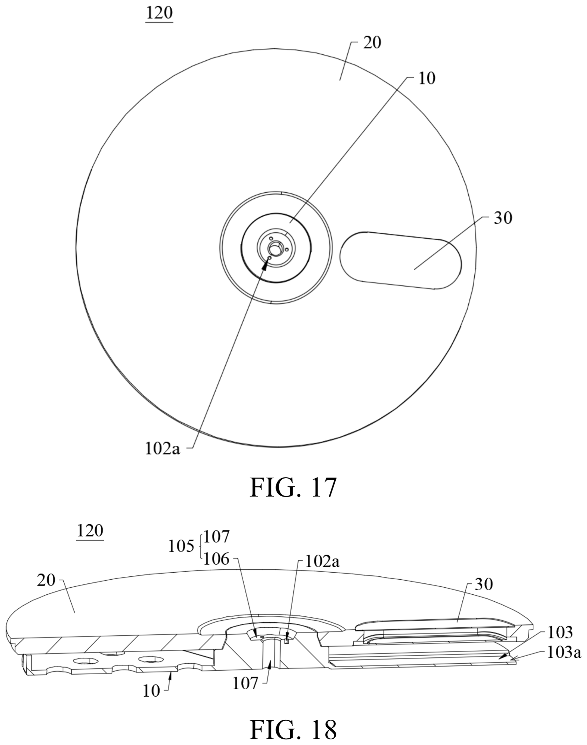

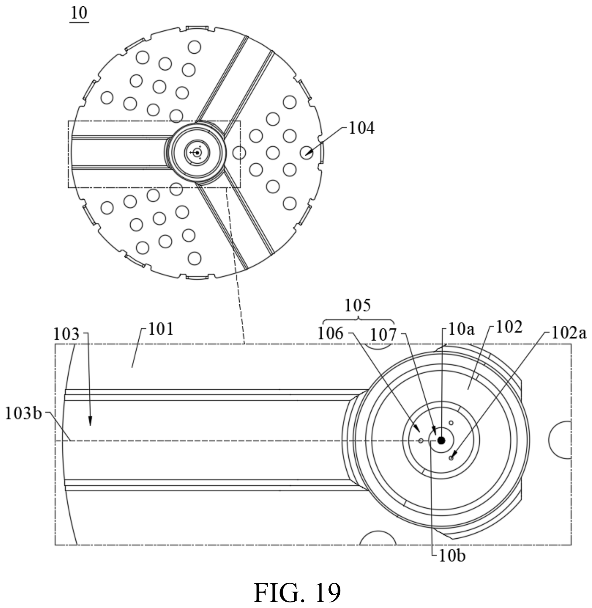

Reference is made to FIG. 17, FIG. 18, and FIG. 19 in combination. FIG. 17 is a schematic structural view of the end cover assembly 120 illustrated in FIG. 3 according to a fourth embodiment. FIG. 18 is a schematic cross-sectional structural view of the end cover assembly 120 illustrated in FIG. 17. FIG. 19 is a schematic structural view of the current collector plate 10 in the end cover assembly 120 illustrated in FIG. 17.

The end cover assembly 120 illustrated in this embodiment differs from the end cover assembly 120 in the first embodiment described above in that the identification mark is disposed on the stepped portion 106 of the liquid injection hole 105. Specifically, the identification mark is disposed on a hole bottom-surface (not illustrated in the drawings) of the stepped portion 106. Exemplarily, the identification mark is the identification hole 102a. Specifically, an opening of the identification hole 102a is located in the hole bottom-surface of the stepped portion 106 facing towards the liquid injection portion 107. The identification hole 102a is recessed in a direction from the hole bottom-surface of the stepped portion 106 to the liquid injection portion 107. When viewed from the thickness direction of the current collector plate 10, a projection of a straight line passing through the center of the opening of the identification hole 102a and parallel to the length direction of the welding groove 103 intersects with the welding groove 103. It may also be understood that, a plane defined by the center of the opening of the identification hole 102a and the central axis 10a of the current collector plate 10 is the reference plane 10b. The reference plane 10b defined by the center of the opening of the identification hole 102a coincides with the first central plane 103b. That is, the reference plane 10b is defined through the welding groove 103. In other words, in the direction parallel to the end cover assembly 120, the identification hole 102a is disposed opposite to the welding groove 103.

In this embodiment, there are three identification holes 102a. The three identification holes 102a are disposed around the periphery of the liquid injection hole 105. The three identification holes 102a are spaced apart from one another and each are spaced apart from the liquid injection hole 105. When viewed from the thickness direction of the current collector plate 10, a projection of a straight line passing through the center of the opening of each identification hole 102a and parallel to the length direction of one welding groove 103 intersects with one welding groove 103. It may also be understood that, the reference plane 10b defined by the center of the opening of each identification hole 102a coincides with the first central plane 103b of one welding groove 103. That is, each reference plane 10b is defined through one welding groove 103. In other words, in the direction parallel to the end cover assembly 120, each identification hole 102a is disposed opposite to one welding groove 103. In some other embodiments, the number of the identification holes 102a may also be four or more.

Additionally, the end cover assembly 120 may further include a sealing member (not illustrated in the drawings). The sealing member is mounted on the liquid injection hole 105 and covers the identification mark. It may be understood that, after the current collector plate 10 is welded to the electrode assembly, the identification mark on the stepped portion 106 of the liquid injection hole 105 will be exposed on the exterior of the energy-storage apparatus 100, making it easier for the explosion-proof valve 30 to be disposed opposite to the identification mark. In this case, after welding the boss portion 102 of the current collector plate 10 to the cover body 20, the sealing member is welded to cover the identification mark. This does not affect the production procedure of the energy-storage apparatus 100 and helps to ensure the production efficiency of the energy-storage apparatus 100.

In this embodiment, during the assembly process of the energy-storage apparatus 100, the boss portion 102 of the current collector plate 10 penetrates through the mounting hole 202 of the cover body 20. The identification hole 102a of the boss portion 102 is exposed relative to the cover body 20. The cover body 20 can be rotated relative to the current collector plate 10. By rotating the cover body 20 relative to the current collector plate 10, the identification hole 102a is disposed opposite to the explosion-proof valve 30, and the cover body 20 and the boss portion 102 are subsequently welded. In this case, the reference plane 10b in which the center of the opening of the identification hole 102a is located is defined through the explosion-proof valve 30 and coincides with the first central plane 103b, and the second central plane 301 coincides with both the reference plane 10b and the first central plane 103b; or, the reference plane 10b in which the center of the opening of the identification hole 102a is located is defined through the explosion-proof valve 30 and coincides with the first central plane 103b, the second central plane 301 intersects with both the reference plane 10b and the first central plane 103b, and an intersection line between the second central plane 301 and the reference plane 10b and an intersection line between the second central plane 301 and the first central plane 103b coincide with the central axis 10a of the current collector plate 10. That is, in the direction parallel to the end cover assembly 120, the identification hole 102a is disposed opposite to the explosion-proof valve 30. In this case, in the thickness direction of the end cover assembly 120, the explosion-proof valve 30 is disposed opposite to at least a portion of the welding groove 103. The ratio of the area of the portion of the welding groove 103 opposite to the explosion-proof valve 30 to the area of the welding groove 103 is equal to or greater than 1/3. For example, the ratio of the area of the portion of the welding groove 103 opposite to the explosion-proof valve 30 to the area of the welding groove 103 may be 2/3 or 4/5.

With this arrangement, the amount of electrolyte blocked by the welding groove 103 may be maximized, ensuring an optimal blocking effect. When the energy-storage apparatus 100 falls, false triggering of the explosion-proof valve 30 caused by direct impact of the electrolyte on the explosion-proof valve 30 may be prevented, which helps to extend the service life of the energy-storage apparatus 100. Additionally, the sealing member can completely cover the identification mark, preventing the identification mark from being exposed on the outer surface of the energy-storage apparatus 100. This avoids compromising the aesthetics of the energy-storage apparatus 100 and protects the identification mark from being scratched.

In some other embodiments, the reference plane 10b defined by the center of the opening of the identification hole 102a may also intersect with the first central plane 103b of the welding groove 103, and an intersection line between the first central plane 103b and the reference plane 10b coincides with the central axis 10a of the current collector plate 10. That is, in the direction parallel to the end cover assembly 120, the identification mark is disposed opposite to a portion of the welding groove 103. In this case, the second central plane 301 intersects with both the reference plane 10b and the first central plane 103b, and an intersection line between the second central plane 301 and the reference plane 10b and an intersection line between the second central plane 301 and the first central plane 103b coincide with the central axis 10a of the current collector plate 10; or, the second central plane 301 coincides with the reference plane 10b and intersects with the first central plane 103b, and an intersection line between the second central plane 301 and the first central plane 103b coincides with the central axis 10a of the current collector plate 10; or, the second central plane 301 intersects with the reference plane 10b and coincides with the first central plane 103b, and an intersection line between the second central plane 301 and the reference plane 10b coincides with the central axis 10a of the current collector plate 10. That is, in the thickness direction of the end cover assembly 120, the explosion-proof valve 30 is disposed opposite to at least a portion of the welding groove 103. With this arrangement, when the energy-storage apparatus 100 falls, false triggering of the explosion-proof valve 30 caused by impact of the electrolyte may be prevented, which helps to extend the service life of the energy-storage apparatus 100.

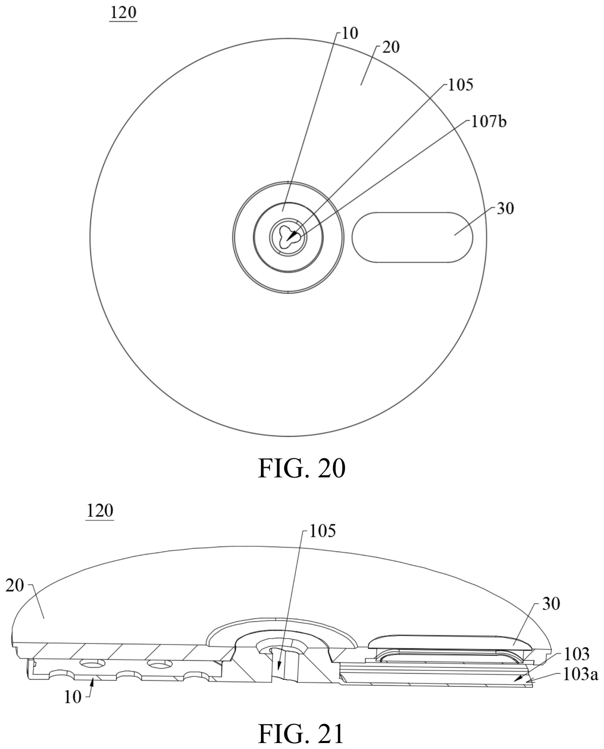

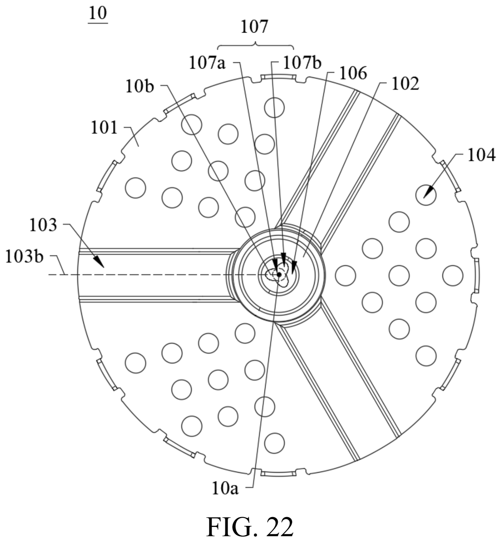

Reference is made to FIG. 20, FIG. 21, and FIG. 22 in combination. FIG. 20 is a schematic structural view of the end cover assembly 120 illustrated in FIG. 3 according to a fifth embodiment. FIG. 21 is a schematic cross-sectional structural view of the end cover assembly 120 illustrated in FIG. 20. FIG. 22 is a schematic structural view of the current collector plate 10 in the end cover assembly 120 illustrated in FIG. 20.

The end cover assembly 120 illustrated in this embodiment differs from the end cover assembly 120 in the first embodiment described above in that the identification mark is the liquid injection hole 105. In this embodiment, the liquid injection hole 105 includes a first portion 107a and a second portion 107b. Specifically, the liquid injection portion 107 includes the first portion 107a and the second portion 107b. The second portion 107b is located at an outer side of the first portion 107a and is formed by recessing a portion of an inner peripheral surface of the first portion 107a. The second portion 107b is the identification mark. When viewed from the thickness direction of the current collector plate 10, a projection of a straight line passing through the center of the second portion 107b and parallel to the length direction of the welding groove 103 intersects with the welding groove 103. It may also be understood that, a plane defined by the center of the second portion 107b and the central axis 10a of the current collector plate 10 is the reference plane 10b. The reference plane 10b defined by the center of the second portion 107b coincides with the first central plane 103b. That is, the reference plane 10b is defined through the welding groove 103. In other words, in the direction parallel to the end cover assembly 120, the second portion 107b is disposed opposite to the welding groove 103. In this embodiment, there are three second portions 107b. The three second portions 107b are disposed around the periphery of the first portion 107a. When viewed from the thickness direction of the current collector plate 10, a projection of a straight line passing through the center of each second portion 107b and parallel to the length direction of one welding groove 103 intersects with one welding groove 103. It may also be understood that, a plane defined by the center of each second portion 107b and the central axis 10a of the current collector plate 10 is one reference plane 10b. The reference plane 10b defined by the center of each second portion 107b coincides with the first central plane 103b of one welding groove 103. That is, the reference plane 10b in which the center of each second portion 107b is located is defined through one welding groove 103. In other words, in the direction parallel to the end cover assembly 120, each second portion 107b is disposed opposite to one welding groove 103.

Additionally, the end cover assembly 120 may further include a sealing member (not illustrated in the drawings). The sealing member is mounted in the liquid injection hole 105. The shape of the sealing member matches the shape of the liquid injection hole 105, enabling the sealing of the liquid injection hole 105. It may be understood that, in the assembly process of the energy-storage apparatus 100, the assembly of the sealing member is a relatively later process. Therefore, the assembly of the sealing member does not affect the assembly between the cover body 20, the current collector plate 10, and the explosion-proof valve 30.

In this embodiment, during the assembly process of the end cover assembly 120, by rotating the cover body 20 relative to the current collector plate 10, the reference plane 10b in which the center of the second portion 107b is located is defined through the explosion-proof valve 30. When the reference plane 10b defined by the center of the second portion 107b coincides with the first central plane 103b, the second central plane 301 coincides with both the reference plane 10b and the first central plane 103b; or, when the reference plane 10b defined by the center of the second portion 107b coincides with the first central plane 103b, the second central plane 301 intersects with both the reference plane 10b and the first central plane 103b, and an intersection line between the second central plane 301 and the reference plane 10b and an intersection line between the second central plane 301 and the first central plane 103b coincide with the central axis 10a of the current collector plate 10. That is, in the direction parallel to the end cover assembly 120, the second portion 107b is disposed opposite to the explosion-proof valve 30. In this case, in the thickness direction of the end cover assembly 120, the explosion-proof valve 30 is disposed opposite to at least a portion of the welding groove 103. The ratio of the area of the portion of the welding groove 103 opposite to the explosion-proof valve 30 to the area of the welding groove 103 is equal to or greater than 1/3. For example, the ratio of the area of the portion of the welding groove 103 opposite to the explosion-proof valve 30 to the area of the welding groove 103 may be 2/3 or 4/5.

In this embodiment, the second portion 107b of the liquid injection hole 105 is configured as the identification mark, which ensures the explosion-proof valve 30 to be disposed opposite to the welding groove 103 and ensures an optimal blocking effect of the welding groove 103 on the electrolyte. In this way, false triggering of the explosion-proof valve 30 caused by direct impact of the electrolyte on the explosion-proof valve 30 may be prevented, which helps to extend the service life of the energy-storage apparatus 100. Furthermore, when injecting the electrolyte into the energy-storage apparatus 100 via the liquid injection hole 105, the electrolyte can be via the central region of the liquid injection hole 105, while the gas inside the energy-storage apparatus 100 can be discharged through the second portion 107b of the liquid injection hole 105, which helps to improve the efficiency of electrolyte injection.

In some other embodiments, the reference plane 10b defined by the center of the second portion 107b may also intersect with the first central plane 103b, and an intersection line between the first central plane 103b and the reference plane 10b coincides with the central axis 10a of the current collector plate 10. That is, in the direction parallel to the end cover assembly 120, the second portion 107b is disposed opposite to a portion of the welding groove 103. When the reference plane 10b defined by the center of the second portion 107b intersects with the first central plane 103b, the second central plane 301 intersects with both the reference plane 10b and the first central plane 103b, and an intersection line between the second central plane 301 and the reference plane 10b and an intersection line between the second central plane 301 and the first central plane 103b coincide with the central axis 10a of the current collector plate 10; or, when the reference plane 10b defined by the center of the second portion 107b intersects with the first central plane 103b, the second central plane 301 coincides with the reference plane 10b and intersects with the first central plane 103b, and an intersection line between the second central plane 301 and the first central plane 103b coincides with the central axis 10a of the current collector plate 10; or, when the reference plane 10b defined by the center of the second portion 107b intersects with the first central plane 103b, the second central plane 301 intersects with the reference plane 10b and coincides with the first central plane 103b, and an intersection line between the second central plane 301 and the reference plane 10b coincides with the central axis 10a of the current collector plate 10. That is, in the thickness direction of the end cover assembly 120, the explosion-proof valve 30 is disposed opposite to at least a portion of the welding groove 103. With this arrangement, false triggering of the explosion-proof valve 30 caused by direct impact of the electrolyte on the explosion-proof valve 30 may be prevented, which helps to extend the service life of the energy-storage apparatus 100.

An electricity-consumption device is further provided in the disclosure. The electricity-consumption device includes the aforementioned energy-storage apparatus 100, and the energy-storage apparatus 100 is configured to supply power to the electricity-consumption device. The electricity-consumption device may be a device requiring electricity, such as a new energy vehicle, an energy-storage power stations, and a server.

The foregoing descriptions are merely specific embodiments of the disclosure, but are not intended to limit the protection scope of the disclosure. Any variation or replacement readily figured out by a person skilled in the art within the technical scope disclosed in the disclosure shall fall within the protection scope of the disclosure. The embodiments and the features of the disclosure may be combined without conflict. Therefore, the protection scope of the disclosure shall be subject to the protection scope of the claims.

## Claims

1. An end cover assembly (120) applied to an energy-storage apparatus (100), comprising a current collector plate (10), a cover body (20), and an explosion-proof valve (30); wherein
the cover body (20) defines a mounting hole (202) and an explosion-proof hole (203), the mounting hole (202) and the explosion-proof hole (203) both extend through the cover body (20) in a thickness direction of the cover body (20), and the mounting hole (202) and the explosion-proof hole (203) are spaced apart from each other;
the explosion-proof valve (30) is mounted on the cover body (20) and covers the explosion-proof hole (203); and
the current collector plate (10) comprises a main body portion (101) and a boss portion (102), the main body portion (101) is located at one side of the cover body (20) in the thickness direction of the cover body (20), and the main body portion (101) defines a welding groove (103); an opening of the welding groove (103) is located in a surface of the main body portion (101) facing towards the cover body (20), and at least a portion of the welding groove (103) is disposed opposite to the explosion-proof valve (30) in a thickness direction of the end cover assembly (120); the boss portion (102) is disposed on the surface of the main body portion (101) facing towards the cover body (20) and penetrates through the mounting hole (202), the boss portion (102) is provided with an identification mark, and when viewed from a thickness direction of the current collector plate (10), a projection of a straight line passing through a center of the identification mark and parallel to a length direction of the welding groove (103) intersects with the welding groove (103).

2. The end cover assembly (120) of claim 1, wherein when viewed from the thickness direction of the current collector plate (10), a projection of a straight line passing through a center of the current collector plate (10) and the center of the identification mark intersects with the welding groove (103).

3. The end cover assembly (120) of claim 1, wherein a ratio of an area of a portion of the welding groove (103) opposite to the explosion-proof valve (30) to an area of the welding groove (103) is equal to or greater than 1/3.

4. The end cover assembly (120) of any one of claims 1 to 3, wherein a plane defined by the center of the identification mark and a central axis (10a) of the current collector plate (10) is a reference plane (10b);
the welding groove (103) is in a shape of a long strip, the welding groove (103) has a first central plane (103b), and the first central plane (103b) is defined through the welding groove (103) and is parallel to the length direction of the welding groove (103); and
the first central plane (103b) coincides with the reference plane (10b); or, the first central plane (103b) intersects with the reference plane (10b), and an intersection line between the first central plane (103b) and the reference plane (10b) coincides with the central axis (10a) of the current collector plate (10).

5. The end cover assembly (120) of claim 4, wherein the identification mark is disposed on a surface of the boss portion (102) facing away from the main body portion (101).

6. The end cover assembly (120) of claim 4, wherein the current collector plate (10) defines a liquid injection hole (105), an opening of the liquid injection hole (105) is located in a surface of the boss portion (102) facing away from the main body portion (101), the liquid injection hole (105) extends through the current collector plate (10) in the thickness direction of the current collector plate (10), and a central axis of the liquid injection hole (105) coincides with the central axis (10a) of the current collector plate (10).

7. The end cover assembly (120) of claim 6, wherein the liquid injection hole (105) comprises a stepped portion (106) and a liquid injection portion (107), the liquid injection portion (107) is located at one side of the stepped portion (106) facing away from the cover body (20) and communicates with the stepped portion (106), a diameter of the stepped portion (106) is greater than a diameter of the liquid injection portion (107), and the identification mark is disposed on a hole bottom-surface of the stepped portion (106).

8. The end cover assembly (120) of claim 7, wherein the end cover assembly (120) further comprises a sealing member, and the sealing member seals the liquid injection hole (105) and covers the identification mark.

9. The end cover assembly (120) of claim 6, wherein the liquid injection hole (105) comprises a first portion (107a) and a second portion (107b), the second portion (107b) is located at an outer side of the first portion (107a) and is formed by recessing a portion of an inner peripheral surface of the first portion (107a), and the second portion (107b) is the identification mark.

10. The end cover assembly (120) of claim 4, wherein the identification mark is an identification protrusion (102b), the identification protrusion is disposed on a side surface of the boss portion (102), the cover body (20) defines an avoidance groove (204), the avoidance groove (204) extends through the cover body (20) and a hole wall of the mounting hole (202) in the thickness direction of the cover body (20), and the avoidance groove (204) avoids the identification protrusion (102b).

11. The end cover assembly (120) of claim 4, wherein the identification mark is an identification groove, an opening of the identification groove is located in a side surface of the boss portion (102), a protrusion is disposed on the cover body (20), and the protrusion is disposed on a hole wall of the mounting hole (202) and is accommodated in the identification groove.

12. The end cover assembly (120) of any one of claims 4 to 11, wherein the explosion-proof valve (30) is in a shape of a long strip, the explosion-proof valve (30) has a second central plane (301), and the second central plane (301) is defined through the explosion-proof valve (30) and is parallel to a length direction of the explosion-proof valve (30);
when the reference plane (10b) coincides with the first central plane (103b), the second central plane (301) coincides with both the reference plane (10b) and the first central plane (103b); or, when the reference plane (10b) coincides with the first central plane (103b), the second central plane (301) intersects with both the reference plane (10b) and the first central plane (103b), and an intersection line between the second central plane (301), the reference plane (10b), and the first central plane (103b) coincides with the central axis (10a) of the current collector plate (10);
when the reference plane (10b) intersects with the first central plane (103b), the second central plane (301) intersects with both the reference plane (10b) and the first central plane (103b), and an intersection line between the second central plane (301) and the reference plane (10b) and an intersection line between the second central plane (301) and the first central plane (103b) coincide with the central axis (10a) of the current collector plate (10); or, when the reference plane (10b) intersects with the first central plane (103b), the second central plane (301) coincides with the reference plane (10b) and intersects with the first central plane (103b), and an intersection line between the second central plane (301) and the first central plane (103b) coincides with the central axis (10a) of the current collector plate (10); or, when the reference plane (10b) intersects with the first central plane (103b), the second central plane (301) intersects with the reference plane (10b) and coincides with the first central plane (103b), and an intersection line between the second central plane (301) and the reference plane (10b) coincides with the central axis (10a) of the current collector plate (10).

13. The end cover assembly (120) of any one of claims 1 to 3, wherein a plane defined by the center of the identification mark and a central axis (10a) of the current collector plate (10) is a reference plane (10b);
the welding groove (103) is in a shape of a long strip, the welding groove (103) has a first central plane (103b), and the first central plane (103b) is defined through the welding groove (103) and is parallel to the length direction of the welding groove (103); the first central plane (103b) is spaced apart from the central axis (10a) of the current collector plate (10), and the first central plane (103b) intersects with the reference plane (10b).

14. The end cover assembly (120) of claim 13, wherein the explosion-proof valve (30) is in a shape of a long strip, the explosion-proof valve (30) has a second central plane (301), and the second central plane (301) is defined through the explosion-proof valve (30) and is parallel to a length direction of the explosion-proof valve (30); the second central plane (301) is spaced apart from a central axis of the cover body (20), the second central plane (301) coincides with or intersects with the first central plane (103b), and the second central plane (301) intersects with the reference plane (10b).

15. The end cover assembly (120) of claim 1, wherein the welding groove (103) is implemented as a plurality of welding grooves (103), the plurality of welding grooves (103) are spaced apart from each other, and at least a portion of one of the plurality of welding grooves (103) is disposed opposite to the explosion-proof valve (30) in the thickness direction of the end cover assembly (120); and
the identification mark is implemented as a plurality of identification marks, and the plurality of identification marks are spaced apart from one another; when viewed from the thickness direction of the current collector plate (10), a projection of a straight line passing through a center of each of the plurality of identification marks and parallel to a length direction of one of the plurality of welding grooves (103) intersects with one of the plurality of welding grooves (103).

16. The end cover assembly (120) of claim 1, wherein the main body portion (101) further defines a through hole (104), the through hole (104) extends through the main body portion (101) in a thickness direction of the main body portion (101) and is spaced apart from the welding groove (103), and the through hole (104) and the explosion-proof valve (30) are staggered in the thickness direction of the end cover assembly (120).

17. An energy-storage apparatus (100), comprising a casing (110), an electrode assembly, and the end cover assembly (120) of any one of claims 1 to 16, the casing (110) defines an opening and an accommodating cavity, the electrode assembly is accommodated in the accommodating cavity, the end cover assembly (120) seals the opening, and the current collector plate (10) is electrically connected to the electrode assembly.

18. An electricity-consumption device, comprising the energy-storage apparatus (100) of claim 17, and the energy-storage apparatus (100) is configured to supply power to the electricity-consumption device.
